# DEMANDE DE BREVET EUROPEEN

(11) **EP 1 376 395 A2**
(43) Date de publication de la demande: **02.01.2004**
(21) Numéro de dépôt: 03291526.6
(22) Date de dépôt: 23.06.2003
(51) Int. Cl.: G06F 17/27

(54) **Procédé et dispositif pour élaborer une forme abrégée d'un terme**

(30) Priorité: 24.06.2002 FR 0207774
(71) Demandeur: AIRBUS France, 31060 Toulouse (FR)
(72) Inventeur: Gavieiro-Villatte, Elisa, 40300 Peyrehorade (FR); Beaujard, Florence, 31830 Plaisance du Touch (FR)
(74) Mandataire: Bonnetat, Christian

(57) **Abrégé**

- Procédé et dispositif pour élaborer une forme abrégée d'un terme quelconque qui est utilisé dans un message d'alarme destiné à être affiché sur un écran du poste de pilotage d'un aéronef.
- Le dispositif (1) comporte une base de données (2) comportant un ensemble de règles de construction prédéterminées, un moyen de traitement (3) susceptible de recevoir des termes qui sont utilisés dans au moins un message d'alarme destiné à être affiché sur au moins un écran du poste de pilotage d'un aéronef, et soumettant tout terme reçu audit ensemble de règles de construction prédéterminées de manière à former automatiquement une pluralité d'abréviations différentes dudit terme, un moyen (8) permettant à au moins un opérateur d'analyser les abréviations ainsi formées, en les soumettant chacune à au moins un critère de transparence, et un moyen (10) sélectionnant, en fonction de cette analyse, une forme abrégée pour ledit terme.

## Description

La présente invention concerne un procédé et un dispositif pour élaborer une forme abrégée d'un terme quelconque qui est utilisé dans au moins un message d'alarme destiné à être affiché sur au moins un écran du poste de pilotage d'un aéronef, par exemple d'un avion de transport.

On sait que, lorsqu'au cours d'un vol un avion sort de sa configuration nominale, un système d'alarme intervient généralement en engendrant des alarmes. Ces alarmes ont notamment pour objet de permettre aux pilotes de l'avion :
- de connaître tout état de panne et son degré de gravité ;
- d'identifier sans ambiguïté tout circuit en panne ; et
- d'indiquer sans risque de confusion la ou les actions (ou opérations) correctives appropriées.

Ces objectifs sont atteints par la combinaison de messages d'alarme textuels, de signaux lumineux et/ou de signaux sonores, diffusés par des équipements périphériques appropriés.

De plus, lorsqu'une telle alarme est déclenchée, les pilotes sont amenés à réaliser des tâches précises et délicates, souvent en conditions d'urgence.

A cet effet, le partage des tâches, ainsi que le traitement de la situation, sont très protocolaires. En effet, un premier pilote ("pilot flying") prend en charge la poursuite du vol, pendant que le second pilote ("pilot not flying") traite la panne.

Pour ce faire, au moins un écran de visualisation, par exemple un écran "ECAM" faisant partie d'un dispositif de surveillance centralisé de différents systèmes de l'avion, indique aux pilotes la liste des opérations à effectuer pour remédier à la panne ou tout au moins limiter ses effets négatifs. A cet effet, le second pilote lit à haute voix chaque opération à réaliser. Dans le cas de pannes critiques, il anticipe l'action en plaçant sa main sur la commande à actionner, attendant l'approbation du premier pilote avant de s'exécuter. Dans le cas de pannes moins critiques, il exécute directement l'action. Le premier pilote écoute attentivement les instructions lues par le second pilote et vérifie que l'action est correctement anticipée, ou qu'elle a été correctement accomplie. Il exprime son approbation en répétant à haute voix l'opération qu'il a entendue.

Pour des raisons de sécurité, il est donc absolument nécessaire que les différents messages textuels d'alarme soient bien reconnus et compris par chacun des pilotes. Or, pour des raisons de place, lesdits messages d'alarme sont formés essentiellement à partir d'abréviations que les pilotes doivent donc pouvoir reconnaître rapidement et sans ambiguïté.

En outre, si les messages d'alarme sont généralement construits sur la base de la langue anglaise qui est la langue officielle en aéronautique, il n'en demeure pas moins qu'une très grande partie des pilotes amenés à piloter des avions, sont d'origines culturelles et linguistiques très variées. Ainsi, il existe plusieurs configurations linguistiques des équipages de vol : 100% anglophones, 50% anglophones ou 100% non anglophones (ne partageant pas nécessairement la même langue maternelle).

Ce caractère multiculturel, ainsi que le caractère oral, imposent de considérer les messages d'alarme de façon spécifique car, bien que construits sur la base de l'anglais, ces messages d'alarme sont amenés à être utilisés par de multiples nationalités. Les messages d'alarme seront prononcés avec de multiples accents et entendus par de nombreuses oreilles pas toutes réceptives au même timbre acoustique.

La présente invention a pour objet d'élaborer des formes abrégées de termes utilisés dans des messages d'alarme de manière à apporter une réponse efficace aux besoins, exigences et contraintes imposés par le milieu aéronautique, principalement en conditions opérationnelles. Par le document US-6 188 976, on connaît par exemple un appareil et une méthode pour former un modèle de langage de référence particulier.

Par ailleurs, on connaît de très nombreux documents relatifs à l'analyse et/ou au traitement du langage. On peut citer à titre d'illustration :
- le document WO-0193246 qui concerne un procédé permettant de créer un modèle de langage, à partir d'un corpus indépendant de tâches. Dans un mode de réalisation particulier, on crée un modèle de langage unifié dépendant des tâches. Ledit modèle de langage unifié renferme une pluralité de grammaires non contextuelles à non-terminaux et un modèle hybride du type N-gram dont certains non-terminaux au moins sont identiques à ceux de la grammaire non contextuelle ;
- le document WO-02071391 qui concerne un procédé pour convertir un discours oral en texte en utilisant une hiérarchie de modèles contextuels. Cette hiérarchie de modèles contextuels est statistiquement lissée en un modèle de langage. Ce procédé consiste à traiter un texte avec une pluralité de modèles contextuels, chacun de ces modèles correspondant à un noeud dans une hiérarchie de ladite pluralité. L'invention porte également sur l'identification d'au moins un des modèles contextuels concernant le texte, et sur le traitement des énoncés oraux subséquents de l'utilisateur au moyen du modèle contextuel identifié ;
- le document EP-1 067 465 qui décrit un module de langue indépendant de l'application pour des applications indépendantes de la langue, qui répond à une demande provenant d'une application identifiant un concept qui est générique de différentes langues et la langue dans laquelle ce concept est exprimé, en engendrant et en retournant une expression du concept identifié dans la langue identifiée pour l'application en communication. Le module de langue est mis en oeuvre dans une forme de programmation orientée objet et comprend les exemples des objets suivants de classes fondamentales, fournis par une infrastructure pour le développement du module de langue : un objet de concept pour définir les concepts génériques d'une manière indépendante de la langue et pointer sur des définitions de concepts, chacune définissant le concept correspondant dans une langue différente, un objet de définition de concept pour définir les concepts d'une manière indépendante de la langue, pour pointer vers des analyseurs syntaxiques, chacun exprimant une partie d'une expression du concept dans la langue de la définition du concept, et pour associer toutes les variables qui sont incluses dans le concept avec les analyseurs syntaxiques, et un analyseur syntaxique pour exprimer des parties des expressions de concept et des valeurs de toutes les variables associées dans les langues de définition de concept. Les variables sont définies au niveau des concepts. Des classes fondamentales sont également incluses pour les langues, les variables et les types de données. L'infrastructure de développement comprend en outre, une interface de programme d'application pour créer, modifier, et supprimer des exemples de classes dans une base de données compilable dans le dépôt de module de langue, et une base de données de fragments de supports pour former des versions pouvant être communiquées des concepts ;
- le document EP-1 102 177 qui concerne un système de prévision d'instruction pour des systèmes comprenant le langage naturel, comportant une interface d'utilisateur pour recevoir des instructions d'un utilisateur. Un système de prévision d'instruction reçoit les instructions de l'interface d'utilisateur et prédit au moins une prochaine instruction qui doit être vraisemblablement présentée par l'utilisateur en fonction d'un historique d'instructions ; et
- le document FR-2 825 496 qui concerne un procédé et un système d'analyse syntaxique large de corpus, notamment de corpus spécialisés. Le procédé d'analyse syntaxique large est basé sur un apprentissage non supervisé sur un corpus, comprenant un enchaînement itératif de deux phases :
   ■ une phase d'apprentissage, dans laquelle des informations linguistiques sont acquises à partir des cas d'analyse non ambigus ; et
   ■ une phase de résolution, dans laquelle les cas d'analyse ambigus sont résolus en exploitant les informations acquises lors de la phase d'apprentissage.
Un corpus spécialisé représente un ensemble de textes portant sur un domaine spécialisé ou technique particulier. Tout corpus de ce type est caractérisé d'une part par une certaine homogénéité thématique et d'autre part par une grande complexité syntaxique : ces corpus sont écrits dans un jargon technique qui utilisent des termes techniques relativement longs et de complexité syntaxique importante. Ceci rend en général l'analyse syntaxique automatique de corpus spécialisés particulièrement difficile, en particulier à cause des cas multiples d'ambiguïté de rattachement prépositionnel.

La présente invention concerne donc un procédé pour élaborer une forme abrégée d'un terme quelconque qui est utilisé dans au moins un message d'alarme destiné à être affiché sur au moins un écran du poste de pilotage d'un aéronef.

Selon l'invention, ledit procédé est remarquable en ce que :
a) on soumet ledit terme à un ensemble de règles de construction prédéterminées de manière à former une pluralité d'abréviations différentes dudit terme ;
b) on analyse les abréviations ainsi formées, en les soumettant chacune à au moins un critère de transparence ; et
c) à partir de cette analyse, on sélectionne comme forme abrégée pour ledit terme :
   - si une seule desdites abréviations satisfait audit critère de transparence, cette abréviation ;
   - si aucune desdites abréviations ne satisfait audit critère de transparence, ledit terme en entier ; et
   - si plusieurs desdites abréviations satisfont audit critère de transparence, celle qui a satisfait le plus rapidement audit critère de transparence.

De façon avantageuse, ledit ensemble de règles de construction comprend au moins certaines des règles suivantes :
- l'ajout d'une marque morphologique ;
- la suppression des voyelles ;
- la troncation ;
- la conservation des syllabes ;
- la conservation de la lettre initiale de chaque syllabe ; et
- la suppression des consonnes doubles.

De plus, avantageusement, ledit critère de transparence comprend deux paramètres :
- la justesse de reconnaissance du terme à partir de l'abréviation ; et
- la durée pour la reconnaissance.

De préférence, à l'étape b) précitée, l'analyse est mise en oeuvre par au moins un pilote d'aéronef.

Par ailleurs, ledit procédé conforme à l'invention peut permettre d'élaborer les formes abrégées d'une pluralité de termes auxquels est déjà associée à chaque fois une abréviation préétablie. Dans ce cas, avantageusement, on réalise les opérations suivantes :
- on analyse lesdites abréviations préétablies, en les soumettant chacune à au moins un critère de transparence ; et
- à partir de cette analyse :
   . pour les abréviations qui ont satisfait audit critère de transparence, on les conserve comme formes abrégées pour les termes correspondants ; et
   . pour les abréviations qui n'ont pas satisfait audit critère de transparence, on met en oeuvre, pour chacun des termes associés auxdites abréviations, lesdites étapes a) à c) pour élaborer les formes abrégées appropriées.

Par ailleurs, de façon avantageuse, dans une étape préliminaire, on choisit pour au moins un concept relatif à l'aéronef un terme approprié [pour lequel terme on met en oeuvre ultérieurement lesdites étapes a) à c)], en réalisant les opérations suivantes :
- on analyse un mot initial prédéterminé, qui est utilisé pour ledit concept, en le soumettant à un premier ensemble de critères décisionnels ;
- à partir de cette analyse :
   . si ledit mot initial satisfait à tous les critères décisionnels dudit premier ensemble, on utilise ce mot initial comme terme approprié pour ledit concept ; et
   . si ledit mot initial ne satisfait pas à tous ces critères décisionnels dudit premier ensemble, on détermine au moins un mot additionnel pour ce concept, qui est différent dudit mot initial ; puis :
      * on soumet lesdits mots initial et additionnel à un second ensemble de critères décisionnels ; et
      * on utilise, comme terme approprié pour ledit concept, celui desdits mots initial et additionnel qui a satisfait au plus grand nombre de critères décisionnels dudit second ensemble.

Dans ce cas, de préférence :
- ledit second ensemble de critères décisionnels comprend au moins certains des critères suivants :
   . des critères syntaxiques ;
   . des critères terminologiques ; et
   . des critères aéronautiques ; et/ou
- ledit premier ensemble de critères décisionnels correspond audit second ensemble de critères décisionnels.

La présente invention concerne également un dispositif pour élaborer une forme abrégée d'un terme quelconque qui est utilisé dans au moins un message d'alarme destiné à être affiché sur au moins un écran du poste de pilotage d'un aéronef.

Selon l'invention, ledit dispositif est remarquable en ce qu'il comporte :
- au moins une première base de données comportant un ensemble de règles de construction prédéterminées ;
- un moyen de traitement qui est relié à ladite première base de données, qui est susceptible de recevoir des termes et qui soumet tout terme reçu audit ensemble de règles de construction prédéterminées de manière à former automatiquement une pluralité d'abréviations différentes dudit terme ;
- au moins un premier moyen permettant à au moins un opérateur d'analyser les abréviations ainsi formées, en les soumettant chacune à au moins un critère de transparence ; et
- un deuxième moyen relié audit premier moyen et sélectionnant, en fonction de ladite analyse, une forme abrégée pour ledit terme.

En outre, dans un mode de réalisation préféré, ledit dispositif comporte de plus :
- au moins une deuxième base de données comprenant, pour une pluralité de termes, des abréviations préétablies ;
- au moins un troisième moyen permettant à au moins un opérateur d'analyser lesdites abréviations préétablies, en les soumettant chacune à au moins un critère de transparence ; et
- un quatrième moyen relié audit troisième moyen et indiquant, en fonction de ladite analyse, si lesdites abréviations sont conservées ou non comme formes abrégées pour les termes correspondants.

Par ailleurs, avantageusement, le dispositif conforme à l'invention comporte de plus :
- au moins une troisième base de données comportant des mots initiaux qui sont utilisés pour des concepts particuliers relatifs à l'aéronef ;
- au moins une quatrième base de données comportant un premier ensemble de critères décisionnels ;
- au moins un cinquième moyen permettant à au moins un opérateur d'analyser au moins certains desdits mots initiaux, en les soumettant chacun audit premier ensemble de critères décisionnels ;
- un sixième moyen relié audit cinquième moyen et indiquant, en fonction de ladite analyse, si lesdits mots initiaux sont conservés ou non comme termes appropriés pour lesdits concepts ;
- au moins une cinquième base de données comportant un second ensemble de critères décisionnels ;
- au moins une sixième base de données comportant des mots additionnels pour lesdits concepts ;
- au moins un septième moyen permettant à au moins un opérateur d'analyser les mots initiaux non conservés et les mots additionnels correspondants, en les soumettant audit second ensemble de critères décisionnels ; et
- un huitième moyen relié audit septième moyen et indiquant, en fonction de ladite analyse, lesquels, parmi lesdits mots initiaux non conservés et lesdits mots additionnels, sont utilisés comme termes appropriés pour les concepts correspondants.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 montrent des unités spécifiques faisant partie, dans des modes de réalisation particuliers, d'un dispositif conforme à l'invention.

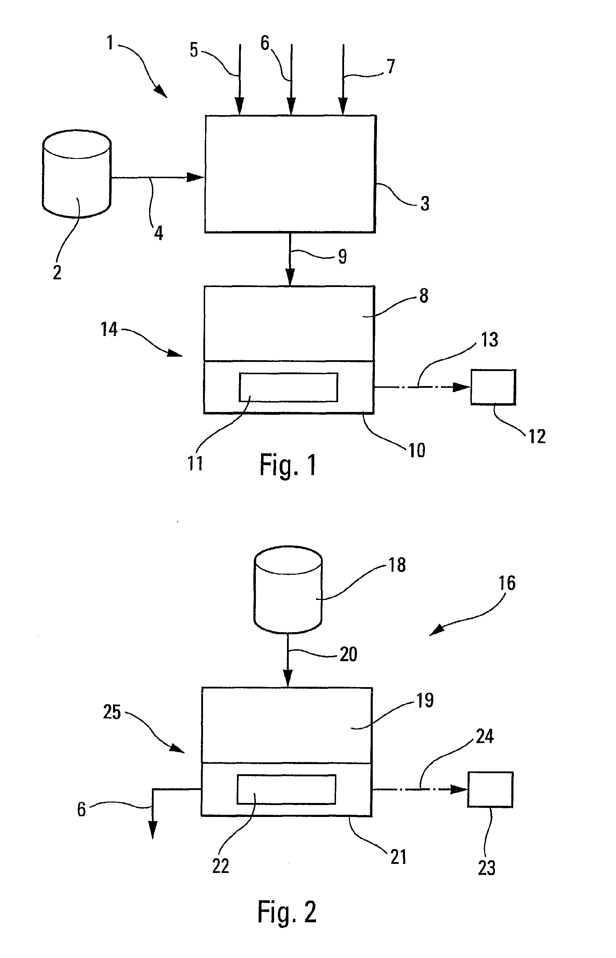

Le dispositif 1 conforme à l'invention et représenté schématiquement dans un mode de réalisation de base sur la figure 1, est destiné à l'élaboration d'une forme abrégée pour des termes qui sont utilisés dans des messages d'alarme destinés à être affichés sur au moins un écran, par exemple de type "ECAM", du poste de pilotage d'un aéronef, notamment d'un avion de transport.

Selon l'invention, ledit dispositif 1 comporte :
- une base de données 2 comportant un ensemble de règles de construction prédéterminées, précisées ci-dessous ;
- un moyen de traitement 3 qui est relié à ladite base de données 2 par une liaison 4, qui est susceptible de recevoir des termes par des liaisons 5, 6 et 7 précisées ci-dessous, et qui soumet tout terme reçu audit ensemble de règles de construction prédéterminées de manière à former automatiquement une pluralité d'abréviations différentes dudit terme ;
- un moyen 8 relié par une liaison 9 au moyen de traitement 3 et permettant à au moins un opérateur d'analyser les abréviations ainsi formées, en les soumettant chacune à au moins un critère de transparence ; et
- un moyen 10 sélectionnant, en fonction de ladite analyse, une forme abrégée pour ledit terme.

Ledit moyen 10 sélectionne comme forme abrégée pour ledit terme :
- si une seule desdites abréviations satisfait audit critère de transparence, cette abréviation ;
- si aucune desdites abréviations ne satisfait audit critère de transparence, ledit terme en entier ; et
- si plusieurs desdites abréviations satisfont audit critère de transparence, celle qui satisfait le mieux (le plus rapidement, comme précisé ci-dessous) audit critère de transparence.

Ledit moyen 10 peut présenter les résultats de sa sélection, par exemple, sur un écran de visualisation 11, ou les enregistrer sur un support d'enregistrement usuel 12, comme illustré par une liaison 13 en traits mixtes sur la figure 1.

Selon l'invention, ladite base de données 2 comprend au moins les règles suivantes :
- l'ajout d'une marque morphologique ;
- la suppression des voyelles ;
- la troncation ;
- la conservation des syllabes ;
- la conservation de la lettre initiale de chaque syllabe ; et
- la suppression des consonnes doubles.

Par ailleurs, le critère de transparence utilisé par un ou plusieurs opérateurs pour analyser les abréviations formées par le moyen de traitement 3, comprend deux paramètres présentant l'ordre de priorité suivant :
1/ la justesse de reconnaissance du terme à partir de l'abréviation ;
2/ la durée pour la reconnaissance.

Ainsi, pour départager deux abréviations du point de vue de leur transparence, l'exactitude ou justesse des réponses prime sur la durée (ou la vitesse) de la reconnaissance. Ce dernier paramètre est toutefois utilisé pour départager plusieurs abréviations qui ont satisfait de la même manière audit premier paramètre prioritaire.

Dans un mode de réalisation préféré, lesdits moyens 8 et 10 peuvent faire partie d'une même unité de traitement 14, en particulier un ordinateur, par exemple un ordinateur personnel.

Cet ordinateur 14 peut recevoir, par exemple automatiquement, les abréviations dudit moyen de traitement 3 et les présenter à l'opérateur, notamment en les affichant sur l'écran 11 ou en les imprimant sur un support tel qu'une fiche en papier par exemple. L'opérateur, en analysant les abréviations (par rapport au critère de transparence), peut entrer ses réponses dans l'ordinateur 14 par l'intermédiaire des moyens 8, par exemple un clavier alphanumérique ou une souris d'ordinateur ou bien un moyen de lecture électronique d'une fiche en papier qui a été remplie par l'opérateur. Le moyen 10, par exemple un processeur, fait alors la synthèse de ces réponses pour réaliser la sélection de la forme abrégée appropriée à chaque terme.

De préférence, on demande au moins à un ou plusieurs pilotes d'aéronef de réaliser l'analyse précitée avec le critère de transparence, puisque ce sont eux qui devront utiliser les formes abrégées choisies et ils sont donc les mieux à même de faire cette analyse.

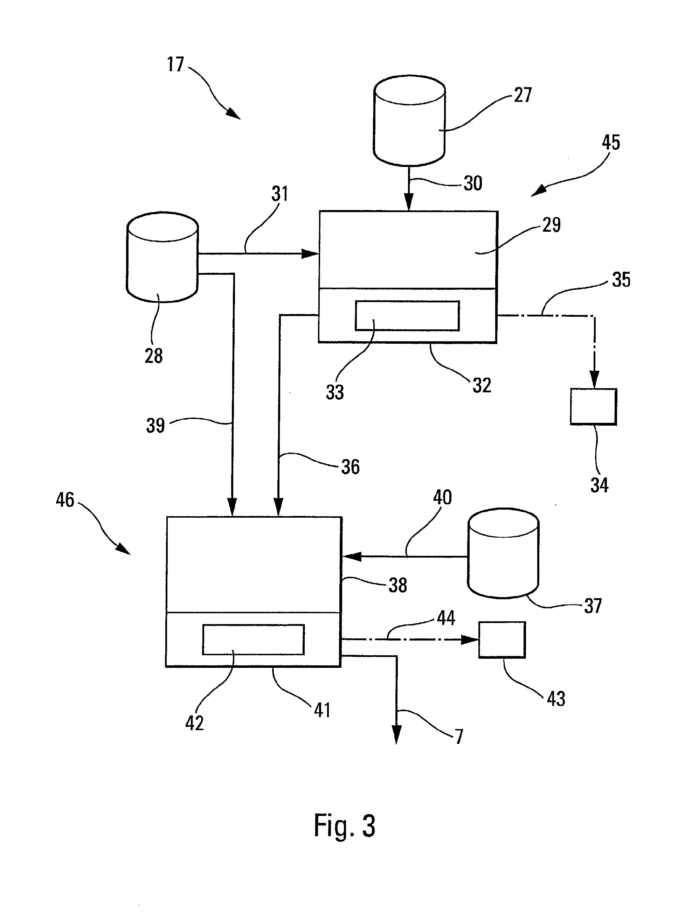

Quant aux termes qui sont traités par l'unité de traitement 3, ils peuvent être fournis à cette dernière :
- par l'intermédiaire de la liaison 5, directement par un opérateur ; ou
- par l'intermédiaire de la liaison 6, par une unité complémentaire 16 représentée sur la figure 2 et pouvant faire partie du dispositif 1 conforme à l'invention ; ou
- par l'intermédiaire de la liaison 7, par une unité complémentaire 17 représentée sur la figure 3 et pouvant faire partie du dispositif 1 conforme à l'invention.

L'unité 16 a pour objet d'élaborer les formes abrégées d'une pluralité de termes, auxquels est déjà associée à chaque fois une abréviation préétablie.

A cet effet, ladite unité 16 comporte :
- une base de données 18 comprenant, pour ladite pluralité de termes, lesdites abréviations préétablies ;
- un moyen 19 relié par une liaison 20 à la base de données 18 et permettant à au moins un opérateur d'analyser lesdites abréviations préétablies, en les soumettant chacune à au moins un critère de transparence. De préférence, ledit critère de transparence est la justesse de reconnaissance du terme à partir de l'abréviation ; et
- un moyen 21 relié audit moyen 19 et indiquant, en fonction de ladite analyse, si lesdites abréviations sont conservées ou non comme formes abrégées pour les termes correspondants.

Selon l'invention :
- concernant les abréviations qui ont satisfait audit critère de transparence, on les conserve tous comme formes abrégées pour les termes correspondants. Le moyen 21 peut présenter ces formes abrégées conservées sur un écran de visualisation 22 ou les enregistrer sur un support d'enregistrement usuel 23, comme illustré par une liaison 24 en traits mixtes ; et
- concernant les abréviations qui n'ont pas satisfait audit critère de transparence, ledit moyen 21 peut les transmettre à l'unité de traitement 3 par la liaison 6, pour leur appliquer les traitements précités.

Lesdits moyens 19 et 21 peuvent également faire partie d'une unité de traitement 25 (ordinateur personnel par exemple) qui est similaire à l'unité de traitement 14 de la figure 1.

Par ailleurs, l'unité 17 représentée sur la figure 3 a pour objet de sélectionner pour différents concepts de l'aéronef utilisés dans les messages d'alarme à chaque fois un terme approprié, pour lequel on recherchera ultérieurement la forme abrégée la mieux adaptée.

Ladite unité 17 comporte à cet effet :
- une base de données 27 comportant des mots initiaux qui sont utilisés pour des concepts particuliers ;
- une base de données 28 comportant un premier ensemble de critères décisionnels ;
- un moyen 29 relié par des liaisons 30 et 31 respectivement auxdites bases de données 27 et 28 et permettant à au moins un opérateur d'analyser au moins certains desdits mots initiaux, en les soumettant chacun audit premier ensemble de critères décisionnels ;
- un moyen 32 relié audit moyen 29 et indiquant, en fonction de ladite analyse, si lesdits mots initiaux sont conservés ou non comme termes appropriés pour lesdits concepts. S'ils sont conservés, ledit moyen 32 peut les afficher (écran de visualisation 33) ou les enregistrer sur un support approprié 34 (liaison 35) et, s'ils ne sont pas conservés, il peut les transmettre par une liaison 36 ;
- une base de données comportant un second ensemble de critères décisionnels. Dans le mode de réalisation préféré représenté sur la figure 3, ledit second ensemble de critères décisionnels correspond audit premier ensemble de critères décisionnels, de sorte qu'une seule base de données 28 est suffisante pour les deux ensembles ;
- une base de données 37 comportant des mots additionnels pour lesdits concepts ;
- un moyen 38 relié par des liaisons 39 et 40 respectivement auxdites bases de données 28 et 37 et permettant à au moins un opérateur d'analyser les mots initiaux non conservés et les mots additionnels correspondants, en les soumettant audit second ensemble de critères décisionnels ; et
- un moyen 41 relié audit moyen 38 et indiquant, en fonction de ladite analyse, lesquels, parmi lesdits mots initiaux non conservés et lesdits mots additionnels, sont utilisés comme termes appropriés pour les concepts correspondants.

Ledit moyen 41 peut présenter les résultats, par exemple, sur un écran de visualisation 42, ou les enregistrer sur un support d'enregistrement usuel 43, comme illustré par une liaison 44 en traits mixtes sur la figure 3, ou bien les transmettre à l'unité de traitement 3 par la liaison 7.

Les moyens 29 et 32, 38 et 41 peuvent également faire partie d'une unité de traitement 45, 46 (ordinateur personnel par exemple) qui est similaire à l'unité de traitement 14 de la figure 1.

Selon l'invention, lesdits premier et second ensembles de critères décisionnels comprennent au moins certains des critères suivants :
- des critères syntaxiques ;
- des critères terminologiques ; et
- des critères aéronautiques.

Plus précisément, les critères syntaxiques concernent les phénomènes dérivationnel et flexionnel et sont organisés en quatre groupes : trois groupes sont dédiés au phénomène de désinence : morphème final d'un mot qui exprime la flexion grammaticale, c'est-à-dire le cas et le nombre des substantifs et adjectifs et le temps et le mode des verbes, et un quatrième groupe traite de la préfixation. Les critères terminologiques consistent en divers types de repérages : homographie, homophonie, synonymie. Les critères terminologiques couvrent aussi les critères généalogiques et de tendance géographique. Le critère aéronautique, quant à lui, passe par l'exploration de documents attestés et reconnus qui font partie soit de la documentation interne, soit de la documentation externe. Par documentation interne, on entend la documentation sur laquelle un constructeur aéronautique a pouvoir de modification, tant du point de vue du contenu que du contenant (mise en forme matricielle). Au contraire, par documentation externe, on entend les références documentaires sur lesquelles un constructeur aéronautique n'a aucun pouvoir décisionnel de modification, telles que des normes internationales, la documentation d'autres constructeurs aéronautiques, etc ...

On précise ci-après différents exemples de traitement mis en oeuvre par le dispositif 1 conforme à la présente invention :
A/ Si un opérateur ou l'une des unités 16 ou 17 entre le terme "window" [terme anglais signifiant "fenêtre" en français, l'anglais étant la langue (officielle) utilisée en aéronautique] dans le moyen de traitement 3, ce dernier forme les abréviations suivantes (entre parenthèses, on présente les règles de construction utilisées à cet effet) :
   - WNDW (suppression des voyelles) ;
   - WIN (troncation postérieure à partir de la troisième lettre) ;
   - WIND (conservation de la première syllabe et de la première lettre de la seconde syllabe) ; et
   - WDW (conservation de la lettre initiale de chaque syllabe et de la lettre finale du terme),
   les autres règles de construction n'étant pas applicables en l'espèce.
   Parmi ces abréviations, WIN et WIND ne sont pas évaluées, car elles ressemblent à des mots existants. En revanche, les abréviations WNDW et WDW sont soumises au critère de transparence et 70% des opérateurs (pilotes, ...) reconnaissent le mot "window" à partir de WDW et 90% à partir de WNDW. De plus, WNDW a été reconnu dans une durée plus courte que la durée de reconnaissance de WDW.
   A partir de ces résultats, le moyen 10 retient donc "WNDW" comme forme abrégée pour le terme "window".
B/ Pour le terme "aircraft" ("aéronef" en français), la base de données 18 de la figure 2 contient l'abréviation préétablie "A/C". Or, cette abréviation ne satisfait pas au critère de transparence mis en oeuvre par le moyen 19. Aussi, le moyen 21 transmet ce terme à l'unité de traitement 3 (figure 1) qui forme les abréviations suivantes :
   - ARCRFT (suppression des voyelles) ;
   - AIR (troncation postérieure à partir de la troisième lettre) ;
   - AIRC (conservation de la première syllabe et de la première lettre de la seconde syllabe) ; et
   - ACT (conservation de la lettre initiale de chaque syllabe et de la lettre finale du terme).

   Les abréviations AIR et ACT qui ressemblent trop à des mots existants ne sont pas évaluées.
   Pour les deux abréviations restantes (AIRC et ARCRFT), seul ARCRFT remplit le critère de transparence.
C/ Pour le concept d'anormalité, on connaît le terme anglais "abnormal" ("anormal" en français) issu de la base de données 27 de la figure 3. Or, ce terme ne vérifie pas tous les critères décisionnels (moyen 29). On lui associe le terme "(not) normal" issu de la base de données 37. Le processus décisionnel visant à départager les termes "abnormal" et "(not) normal" est mis en oeuvre par les moyens 38 et 41. Il apparaît que le terme "(not) normal" satisfait le plus grand nombre de critères décisionnels. Par conséquent, le moyen 41 transmet ce dernier terme à l'unité de traitement 3 qui forme les abréviations suivantes :
   - NRML (suppression des voyelles) ;
   - NOR (troncation postérieure à partir de la troisième lettre) ;
   - NORM (conservation de la première syllabe et de la première lettre de la seconde syllabe) ; et
   - NML (conservation de la lettre initiale de chaque syllabe et de la lettre finale du terme).

   L'abréviation NOR n'est pas évaluée.

Parmi les abréviations NORM, NRML et NML évaluées, NORM et NRML satisfont à 100% au premier paramètre prioritaire (reconnaissance du terme) du critère de transparence. Ces deux abréviations sont donc départagées par le second paramètre (durée pour la reconnaissance). NORM est ainsi sélectionnée.

Par conséquent, pour le concept "anormal", il convient d'utiliser le terme "not normal" sous la forme abrégée "NOT NORM".

## Revendications

1. Procédé pour élaborer une forme abrégée d'un terme quelconque qui est utilisé dans au moins un message d'alarme affiché sur au moins un écran du poste de pilotage d'un aéronef,
**caractérisé en ce que** :
a) on soumet ledit terme à un ensemble de règles de construction prédéterminées de manière à former une pluralité d'abréviations différentes dudit terme ;
b) on analyse les abréviations ainsi formées, en les soumettant chacune à au moins un critère de transparence ; et
c) à partir de cette analyse, on sélectionne comme forme abrégée pour ledit terme :
- si une seule desdites abréviations satisfait audit critère de transparence, cette abréviation ;
- si aucune desdites abréviations ne satisfait audit critère de transparence, ledit terme en entier ; et
- si plusieurs desdites abréviations satisfont audit critère de transparence, celle qui a satisfait le plus rapidement audit critère de transparence.

2. Procédé selon la revendication 1,
**caractérisé en ce que** ledit ensemble de règles de construction comprend au moins certaines des règles suivantes :
- l'ajout d'une marque morphologique ;
- ia suppression des voyelles ;
- la troncation ;
- la conservation des syllabes ;
- la conservation de la lettre initiale de chaque syllabe ; et
- la suppression des consonnes doubles.

3. Procédé selon l'une des revendications 1 et 2,
**caractérisé en ce que** ledit critère de transparence comprend deux paramètres :
- la justesse de reconnaissance du terme à partir de l'abréviation ; et
- la durée pour la reconnaissance.

4. Procédé selon l'une quelconque des revendications précédentes,
**caractérisé en ce que**, à l'étape b), l'analyse est mise en oeuvre par au moins un pilote d'aéronef.

5. Procédé selon l'une quelconque des revendications précédentes, pour élaborer les formes abrégées d'une pluralité de termes auxquels est déjà associée à chaque fois une abréviation préétablie,
**caractérisé en ce que** :
- on analyse lesdites abréviations préétablies, en les soumettant chacune à au moins un critère de transparence ; et
- à partir de cette analyse :
. pour les abréviations qui ont satisfait audit critère de transparence, on les conserve comme formes abrégées pour les termes correspondants ; et
. pour les abréviations qui n'ont pas satisfait audit critère de transparence, on met en oeuvre, pour chacun des termes associés auxdites abréviations, lesdites étapes a) à c) pour élaborer les formes abrégées appropriées.

6. Procédé selon l'une quelconque des revendications précédentes, **caractérisé en ce que**, dans une étape préliminaire, on choisit pour au moins un concept relatif à l'aéronef un terme approprié, pour lequel terme on met en oeuvre ultérieurement lesdites étapes a) à c), en réalisant les opérations suivantes :
- on analyse un mot initial prédéterminé, qui est utilisé pour ledit concept, en le soumettant à un premier ensemble de critères décisionnels ;
- à partir de cette analyse :
. si ledit mot initial satisfait à tous les critères décisionnels dudit premier ensemble, on utilise ce mot initial comme terme approprié pour ledit concept ; et
. si ledit mot initial ne satisfait pas à tous ces critères décisionnels dudit premier ensemble, on détermine au moins un mot additionnel pour ce concept, qui est différent dudit mot initial ; puis :
* on soumet lesdits mots initial et additionnel à un second ensemble de critères décisionnels ; et
* on utilise, comme terme approprié pour ledit concept, celui desdits mots initial et additionnel qui a satisfait au plus grand nombre de critères décisionnels dudit second ensemble.

7. Procédé selon la revendication 6,
**caractérisé en ce que** ledit second ensemble de critères décisionnels comprend au moins certains des critères suivants :
- des critères syntaxiques ;
- des critères terminologiques ; et
- des critères aéronautiques.

8. Procédé selon l'une des revendications 6 et 7,
**caractérisé en ce que** ledit premier ensemble de critères décisionnels correspond audit second ensemble de critères décisionnels.

9. Dispositif pour élaborer une forme abrégée d'un terme quelconque qui est utilisé dans au moins un message d'alarme affiché sur au moins un écran du poste de pilotage d'un aéronef,
**caractérisé en ce qu'**il comporte :
- au moins une première base de données (2) comportant un ensemble de règles de construction prédéterminées ;
- un moyen de traitement (3) qui est relié à ladite première base de données (2), qui est susceptible de recevoir des termes et qui soumet tout
- terme reçu audit ensemble de règles de construction prédéterminées de manière à former automatiquement une pluralité d'abréviations différentes dudit terme ;
- au moins un ordinateur (14) recevant automatiquement les abréviations dudit moyen de traitement (13) et les présentant à au moins un opérateur de manière à lui permettre d'analyser lesdites abréviations, en les soumettant chacune à au moins un critère de transparence ; et
- un deuxième moyen (10) relié audit premier moyen (8) et sélectionnant, en fonction de ladite analyse, une forme abrégée pour ledit terme.

10. Dispositif selon la revendication 9,
**caractérisé en ce qu'**il comporte de plus :
- au moins une deuxième base de données (18) comprenant, pour une pluralité de termes, des abréviations préétablies ;
- au moins un troisième moyen (19) permettant à au moins un opérateur d'analyser lesdites abréviations préétablies, en les soumettant chacune à au moins un critère de transparence ; et
- un quatrième moyen (21) relié audit troisième moyen (19) et indiquant, en fonction de ladite analyse, si lesdites abréviations sont conservées ou non comme formes abrégées pour les termes correspondants.

11. Dispositif selon l'une des revendications 9 et 10,
**caractérisé en ce qu'**il comporte de plus :
- au moins une troisième base de données (27) comportant des mots initiaux qui sont utilisés pour des concepts particuliers relatifs à l'aéronef ;
- au moins une quatrième base de données (28) comportant un premier ensemble de critères décisionnels ;
- au moins un cinquième moyen (29) permettant à au moins un opérateur d'analyser au moins certains desdits mots initiaux, en les soumettant chacun audit premier ensemble de critères décisionnels ;
- un sixième moyen (32) relié audit cinquième moyen (29) et indiquant, en fonction de ladite analyse, si lesdits mots initiaux sont conservés ou non comme termes appropriés pour lesdits concepts ;
- au moins une cinquième base de données (28) comportant un second ensemble de critères décisionnels ;
- au moins une sixième base de données (37) comportant des mots additionnels pour lesdits concepts ;
- au moins un septième moyen (38) permettant à au moins un opérateur d'analyser les mots initiaux non conservés et les mots additionnels correspondants, en les soumettant audit second ensemble de critères décisionnels ; et
- un huitième moyen (41) relié audit septième moyen (38) et indiquant, en fonction de ladite analyse, lesquels, parmi lesdits mots initiaux non conservés et lesdits mots additionnels, sont utilisés comme termes appropriés pour les concepts correspondants.
